(19) Europäisches Patentamt
European Patent Office
Office européen des brevets

(11) **EP 2 928 152 B1**

(12) **EUROPÄISCHE PATENTSCHRIFT**

(45) Veröffentlichungstag und Bekanntmachung des Hinweises auf die Patenterteilung:
**23.11.2016  Patentblatt 2016/47**

(21) Anmeldenummer: **15160705.8**

(22) Anmeldetag: **25.03.2015**

(51) Int Cl.:
**H04L 29/06** *(2006.01)*    **G06F 21/32** *(2013.01)*

(54) **Authentifizieren eines Benutzers eines Mobilgerätes mit mehreren Sensoren**

Authentication a user of a mobile device with multiple sensors

Authentification d'un utilisateur d'un appareil mobile avec des senseurs multiples

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2014  DE 102014104755**

(43) Veröffentlichungstag der Anmeldung:
**07.10.2015  Patentblatt 2015/41**

(73) Patentinhaber: **Bundesdruckerei GmbH**
**10969 Berlin (DE)**

(72) Erfinder: **Matejek, Ulrich**
**12167 Berlin (DE)**

(74) Vertreter: **Patentship**
**Patentanwaltsgesellschaft mbH**
**Elsenheimerstaße 65**
**80687 München (DE)**

(56) Entgegenhaltungen:
**EP-A1- 1 318 459        WO-A1-2007/079595**
**US-A1- 2013 127 591**

• **"BRAUNSCHWEIG/WIESBADEN: FRIEDRICH VIEWEG AND SOHN VERLAGSGESELLSCHAFT MBH" In: BEHRENS M. ET AL: "BIOMETRISCHE IDENTIFIKATION", 2001, SPRINGER e-book, XP002743866, ISBN: 9783322908438 * Seite 10, Zeile 1 - Seite 25, Zeile 15 * * Seite 86, Zeile 1 - Seite 89, Zeile 14 * * Seite 107, Zeile 5 - Seite 108, Zeile 12 ***

**Beschreibung**

Die vorliegende Erfindung betrifft das Gebiet der Authentifizierung eines Benutzers eines Mobilgerätes.

Die Druckschrift "Braunschweig/Wiesbaden: Friedrich Vieweg and Sohn Verlagsgesellschaft mbH", Ed: Behrens M. et al.: "Biometrische Identifikation", 2001, Springer, e-book, ISBN: 9783322908438" beschäftigt sich mit der biometrischen Identifikation und soll entsprechende Grundlagen und Verfahren behandeln.

Die Offenlegungsschrift US 2013/127591 A1 zeigt ein Verfahren und ein System zum Authentifizieren eines Nutzers.

Die Offenlegungsschrift EP 1 318 459 A1 zeigt ein System zum Authentifizieren eines Nutzers eines Geräts.

Eine Authentifizierung eines Benutzers eines Mobilgerätes wird üblicherweise mittels einer Eingabe eines Passwortes in das Mobilgerät und eines Vergleichs des eingegebenen Passwortes mit einem vorgespeicherten Passwort realisiert. Dabei kann das Passwort beispielsweise nur Zahlen, beispielsweise in Form einer Persönlichen Identifikationsnummer (PIN), oder eine Zeichenkette umfassen.

Darüber hinaus kann eine Authentifizierung eines Benutzers eines Mobilgerätes auch mittels eines Erfassens eines biometrischen Merkmals des Benutzers, beispielsweise eines Fingerabdrucks oder eines Gesichtsbildes, und eines Vergleichs des erfassten biometrischen Merkmals mit einem vorgespeicherten biometrischen Merkmal realisiert werden.

Die Authentifizierung des Benutzers wird dabei üblicherweise bei jedem Zugriff des Benutzers auf das Mobilgerät durchgeführt. Dies ist mit einem erheblichen Zeitaufwand für den Benutzer verbunden und wird daher als sehr unkomfortabel empfunden.

Es ist daher die Aufgabe der vorliegenden Erfindung, ein effizientes Konzept für die Authentifizierung eines Benutzers eines Mobilgerätes zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe durch einen Vergleich von Sensorgrößen des Mobilgerätes, beispielsweise eines Stimmmusters des Benutzers, eines Gesichtsbildes des Benutzers, einer Position oder einer Beschleunigung des Mobilgerätes, mit Referenzgrößen und eines Bestimmens einer Übereinstimmung zwischen den Sensorgrößen und den Referenzgrößen gelöst werden kann. Das Stimmmuster des Benutzers kann beispielsweise mittels eines Mikrofons des Mobilgerätes erfasst werden. Das Gesichtsbild des Benutzers kann beispielsweise mittels einer Kamera des Mobilgerätes erfasst werden. Die Position oder die Beschleunigung des Mobilgerätes können beispielsweise mittels eines satellitengestützten Lokalisierungssystems oder eines Beschleunigungssensors des Mobilgeräts erfasst werden. Die Übereinstimmung kann jeweils in Form eines Übereinstimmungsmaßes angegeben werden, welches beispielsweise die Wahrscheinlichkeit dafür angibt, dass der gegenständliche Besitzer des Mobilgerätes ein bestimmter oder zulässiger Benutzer des Mobilgerätes ist.

Auf Grundlage der Übereinstimmungsmaße kann das Mobilgerät bestimmen, ob die Authentifizierung des Benutzers beispielsweise mittels eines Passwortvergleichs durchgeführt werden soll oder ob ein Zugriff auf das Mobilgerät unmittelbar gewährt werden kann. Dadurch wird erreicht, dass der Zeitaufwand für die Authentifizierung des Benutzers wesentlich reduziert werden kann. Zudem kann dadurch eine Komfortsteigerung für den Benutzer des Mobilgerätes erreicht werden.

Gemäß einem ersten Aspekt betrifft die Erfindung ein Verfahren zum Authentifizieren eines Benutzers eines Mobilgerätes, wobei das Mobilgerät mehrere Sensoren zur Erfassung von Sensorgrößen aufweist, mit einem Erfassen einer ersten Sensorgröße und einer zweiten Sensorgröße mittels der Sensoren des Mobilgerätes, einem Vergleichen der ersten Sensorgröße mit einer ersten Referenzgröße, um ein erstes Übereinstimmungsmaß zwischen der ersten Sensorgröße und der ersten Referenzgröße zu erhalten, einem Vergleichen der zweiten Sensorgröße mit einer zweiten Referenzgröße, um ein zweites Übereinstimmungsmaß zwischen der zweiten Sensorgröße und der zweiten Referenzgröße zu erhalten, einem Verknüpfen des ersten Übereinstimmungsmaßes mit dem zweiten Übereinstimmungsmaß, um ein Gesamtübereinstimmungsmaß zu erhalten, und einem Vergleichen des Gesamtübereinstimmungsmaßes mit einem vorbestimmten Schwellwert, um den Benutzer zu authentifizieren. Dadurch wird der Vorteil erreicht, dass ein effizientes Authentifizieren des Benutzers des Mobilgerätes durchgeführt werden kann.

Das Mobilgerät kann ein Mobiltelefon, beispielsweise ein Smartphone sein. Die Sensoren des Mobilgerätes können ausgebildet sein, die erste Sensorgröße und die zweite Sensorgröße zu erfassen. Die erste Sensorgröße und die zweite Sensorgröße können eine physikalische Umgebung des Mobilgerätes, beispielsweise eine geographische Position des Mobilgerätes oder eine Beschleunigung des Mobilgerätes, repräsentieren. Die erste Sensorgröße und die zweite Sensorgröße können ferner Eigenschaften des Benutzers, beispielsweise ein Stimmmuster des Benutzers oder ein Gesichtsbild des Benutzers, repräsentieren. Die erste Referenzgröße und die zweite Referenzgröße können in einem Speicher des Mobilgerätes vorgespeichert sein.

Das erste Übereinstimmungsmaß und das zweite Übereinstimmungsmaß können eine Zahl aus einem vorbestimmten Zahlenbereich, beispielsweise aus dem Zahlenbereich zwischen 0 und 1, sein. Das erste Übereinstimmungsmaß und das zweite Übereinstimmungsmaß können beispielsweise einen Wert von 0,3 oder 0,8 aufweisen. Das erste Übereinstimmungsmaß und das zweite Übereinstimmungsmaß können ein Maß für eine Übereinstimmung, Ähnlichkeit oder Gleichheit sein. Das erste Übereinstimmungsmaß und das zweite Übereinstimmungsmaß können eine Wahrscheinlichkeit für eine erkannte Identität des Benutzers darstellen.

Das Gesamtübereinstimmungsmaß kann eine Zahl aus einem vorbestimmten Zahlenbereich, beispielsweise aus dem Zahlenbereich zwischen 0 und 1, sein. Das Gesamtübereinstimmungsmaß kann beispielsweise einen Wert von 0,65 aufweisen. Das Gesamtübereinstimmungsmaß kann ferner auf einen vorbestimmten Zahlenbereich normiert sein. Der vorbestimmte Schwellwert kann beispielsweise einen Wert von 0,5 aufweisen. Der vorbestimmte Schwellwert kann in einem Speicher des Mobilgerätes vorgespeichert sein.

Gemäß einer Ausführungsform ist die erste Sensorgröße oder die zweite Sensorgröße eine der folgenden Sensorgrößen: ein Stimmmuster des Benutzers, ein Gesichtsbild des Benutzers, ein Fingerabdruck des Benutzers, ein Tastatureingabeverhalten des Benutzers, eine geographische Position des Mobilgerätes, eine Raumlage des Mobilgerätes, eine Beschleunigung des Mobilgerätes, eine Helligkeit einer Umgebung des Mobilgerätes, oder ein Abstand des Mobilgerätes zu dem Benutzer. Dadurch wird der Vorteil erreicht, dass die physikalische Umgebung des Mobilgerätes effizient erfasst werden kann.

Das Stimmmuster des Benutzers kann beispielsweise mittels eines Mikrofons als Sensor des Mobilgerätes erfasst werden. Das Gesichtsbild des Benutzers kann beispielsweise mittels einer Kamera als Sensor des Mobilgerätes erfasst werden. Der Fingerabdruck des Benutzers kann beispielsweise mittels eines Fingerabdrucksensors als Sensor des Mobilgerätes erfasst werden. Das Tastatureingabeverhalten des Benutzers kann beispielsweise mittels eines berührungsempfindlichen Bildschirms als Sensor des Mobilgerätes erfasst werden.

Die geographische Position des Mobilgerätes kann beispielsweise mittels eines satellitengestützten Lokalisierungssystems, beispielsweise eines GPS oder Galileo Satellitennavigationssystems, als Sensor des Mobilgerätes erfasst werden. Die Raumlage des Mobilgerätes kann beispielsweise mittels eines Magnetfeldsensors als Sensor des Mobilgerätes erfasst werden. Die Raumlage des Mobilgerätes kann die Orientierung oder Ausrichtung des Mobilgerätes umfassen. Die Beschleunigung des Mobilgerätes kann beispielsweise mittels eines Beschleunigungssensors als Sensor des Mobilgerätes erfasst werden. Die Beschleunigung des Mobilgerätes kann beispielsweise in drei Raumdimensionen erfasst werden. Die Helligkeit der Umgebung des Mobilgerätes kann beispielsweise mittels eines Helligkeitssensors oder einer Kamera als Sensor des Mobilgerätes erfasst werden.

Der Abstand des Mobilgerätes zu dem Benutzer kann beispielsweise mittels eines funkbasierten Abstandssensors, beispielsweise eines feldstärkebasierten funkbasierten Abstandssensors, als Sensor des Mobilgerätes erfasst werden. Die Feldstärke eines empfangenen Signals kann beispielsweise einen Abstand des Mobilgerätes zu dem Benutzer anzeigen. Ferner kann ein Vorhandensein eines funkbasierten Abstandssensors innerhalb eines Abstandsbereiches um das Mobilgerät auf Grundlage einer erfassten oder nicht erfassten Kennung des funkbasierten Abstandssensors durch das Mobilgerät zum Bestimmen eines Abstands eingesetzt werden. Der funkbasierte Abstandssensor kann beispielsweise auf Grundlage des Funkstandards IEEE 802.15.1 realisiert werden.

Gemäß einer Ausführungsform ist die erste Referenzgröße oder die zweite Referenzgröße zeitabhängig oder wird in Abhängigkeit von der Zeit, insbesondere durch das Mobilgerät, verändert oder adaptiert. Dadurch wird der Vorteil erreicht, dass zeitliche Änderungen der Umgebung des Mobilgerätes berücksichtigt werden können.

Die erste Referenzgröße oder die zweite Referenzgröße kann beispielsweise periodisch zu Beginn jeder neuen Sekunde, jeder neuen Minute oder jeder neuen Stunde verändert oder adaptiert werden. Die Veränderung oder Adaption kann beispielsweise in Zeitintervallen im Bereich von 30 Sekunden bis 5 Minuten erfolgen. Die Veränderung oder Adaption der ersten Referenzgröße oder der zweiten Referenzgröße kann auf Grundlage einer Prädiktion der Umgebung des Mobilgerätes für einen zukünftigen Zeitpunkt durchgeführt werden.

Gemäß einer Ausführungsform umfasst das Verknüpfen des ersten Übereinstimmungsmaßes mit dem zweiten Übereinstimmungsmaß ein Gewichten des ersten Übereinstimmungsmaßes mit einem ersten Gewichtungsfaktor und ein Gewichten des zweiten Übereinstimmungsmaßes mit einem zweiten Gewichtungsfaktor. Dadurch wird der Vorteil erreicht, dass der Einfluss der ersten Sensorgröße und der zweiten Sensorgröße auf die Authentifizierung des Benutzers verändert werden kann.

Das Gewichten des ersten Übereinstimmungsmaßes mit dem ersten Gewichtungsfaktor und das Gewichten des zweiten Übereinstimmungsmaßes mit dem zweiten Gewichtungsfaktor kann beispielsweise mittels einer Multiplikation realisiert werden. Der erste Gewichtungsfaktor und der zweite Gewichtungsfaktor können eine Zahl aus einem vorbestimmten Zahlenbereich, beispielsweise aus dem Zahlenbereich zwischen 0 und 1, sein. Der erste Gewichtungsfaktor und der zweite Gewichtungsfaktor können beispielsweise einen Wert von 0,4 oder 0,9 aufweisen.

Gemäß einer Ausführungsform ist der erste Gewichtungsfaktor oder der zweite Gewichtungsfaktor von dem ersten Übereinstimmungsmaß und dem zweiten Übereinstimmungsmaß abhängig oder wird in Abhängigkeit von dem ersten Übereinstimmungsmaß und dem zweiten Übereinstimmungsmaß bestimmt. Dadurch wird der Vorteil erreicht, dass eine gemeinsame Veränderung des ersten Übereinstimmungsmaßes und des zweiten Übereinstimmungsmaßes berücksichtigt werden kann.

Die Abhängigkeit des ersten Gewichtungsfaktors oder des zweiten Gewichtungsfaktors von dem ersten Übereinstimmungsmaß und dem zweiten Übereinstimmungsmaß kann beispielsweise durch die Wahl der eingesetzten Sensorgrößen begründet sein. Falls beispielsweise ein hohes Übereinstimmungsmaß auf Grundlage eines Gesichtsbildes des Benutzers und ein hohes Übereinstimmungsmaß auf Grundlage eines Stimmmusters des Benutzers bestimmt wird, so können die jeweiligen Gewichtungsfaktoren beispielsweise einen hohen Wert aufweisen. Falls beispielsweise ein niedriges Übereinstimmungsmaß auf Grundlage eines Gesichtsbildes des Benutzers und ein hohes Übereinstimmungsmaß auf Grundlage eines Stimmmusters des Benutzers bestimmt wird, so können die jeweiligen Gewichtungsfaktoren beispielsweise einen niedrigen Wert aufweisen.

Gemäß einer Ausführungsform wird der erste Gewichtungsfaktor oder der zweite Gewichtungsfaktor in Abhängigkeit von einer Änderung zumindest einer Sensorgröße bestimmt. Dadurch wird der Vorteil erreicht, dass der erste Gewichtungsfaktor oder der zweite Gewichtungsfaktor ansprechend auf den Eintritt eines Ereignisses in der Umgebung des Mobilgerätes verändert werden können.

Die Änderung zumindest einer Sensorgröße kann beispielsweise mittels eines Vergleichs der Sensorgröße mit einer vorbestimmten Schranke erkannt werden. Überschreitet beispielsweise eine Beschleunigung des Mobilgerätes die vorbestimmte Schranke, so kann der erste Gewichtungsfaktor oder der zweite Gewichtungsfaktor ansprechend auf das Überschreiten der vorbestimmten Schranke in Abhängigkeit von der Änderung der Beschleunigung des Mobilgerätes bestimmt werden.

Gemäß einer Ausführungsform umfasst das Verknüpfen des ersten Übereinstimmungsmaßes mit dem zweiten Übereinstimmungsmaß ein Bestimmen einer Summe des ersten Übereinstimmungsmaßes und des zweiten Übereinstimmungsmaßes. Dadurch wird der Vorteil erreicht, dass das Gesamtübereinstimmungsmaß effizient bestimmt werden kann.

Das Gesamtübereinstimmungsmaß kann folglich mittels einer Summation oder Addition des ersten Übereinstimmungsmaßes und des zweiten Übereinstimmungsmaßes als Ergebnis der Summation oder Addition bestimmt werden. Ferner kann ein arithmetischer Mittelwert des ersten Übereinstimmungsmaßes mit dem zweiten Übereinstimmungsmaß bestimmt werden.

Gemäß einer Ausführungsform umfasst das Verknüpfen des ersten Übereinstimmungsmaßes mit dem zweiten Übereinstimmungsmaß ein Bestimmen eines Produktes des ersten Übereinstimmungsmaßes mit dem zweiten Übereinstimmungsmaß, um das Gesamtübereinstimmungsmaß zu erhalten. Ferner kann ein geometrischer Mittelwert des ersten Übereinstimmungsmaßes mit dem zweiten Übereinstimmungsmaß bestimmt werden.

Gemäß einer Ausführungsform werden das Erfassen der ersten Sensorgröße und der zweiten Sensorgröße, das Vergleichen der ersten Sensorgröße mit der ersten Referenzgröße, das Vergleichen der zweiten Sensorgröße mit einer zweiten Referenzgröße, und das Verknüpfen des ersten Übereinstimmungsmaßes mit dem zweiten Übereinstimmungsmaß zeitlich periodisch mit einer vorbestimmten Periodendauer durchgeführt. Dadurch wird der Vorteil erreicht, dass das Gesamtübereinstimmungsmaß zeitlich periodisch aktualisiert werden kann.

Die vorbestimmte Periodendauer kann beispielsweise 1 Millisekunde, 10 Millisekunden, 100 Millisekunden oder 1 Sekunde sein. Die vorbestimmte Periodendauer kann beispielsweise im Bereich zwischen 1 Sekunde und 30 Sekunden liegen.

Gemäß einer Ausführungsform sind die erste Sensorgröße oder die zweite Sensorgröße innerhalb einer vorbestimmten Gültigkeitszeitdauer gültig, und entspricht die vorbestimmte Periodendauer der vorbestimmten Gültigkeitszeitdauer. Dadurch wird der Vorteil erreicht, dass das Gesamtübereinstimmungsmaß derart zeitlich periodisch aktualisiert werden kann, dass die erste Sensorgröße oder die zweite Sensorgröße innerhalb der Periodendauer gültig sind.

Die vorbestimmte Gültigkeitszeitdauer kann von der eingesetzten Sensorgröße abhängig sein. Die vorbestimmte Gültigkeitszeitdauer kann beispielweise für eine Beschleunigung des Mobilgerätes einen kleinen Wert aufweisen und für eine geographische Position des Mobilgerätes einen hohen Wert aufweisen. Die vorbestimmte Gültigkeitszeitdauer kann beispielsweise 1 Millisekunde, 10 Millisekunden, 100 Millisekunden oder 1 Sekunde sein.

Gemäß einer Ausführungsform wird das Verknüpfen des ersten Übereinstimmungsmaßes mit dem zweiten Übereinstimmungsmaß in Abhängigkeit von einer Änderung zumindest einer Sensorgröße durchgeführt. Dadurch wird der Vorteil erreicht, dass das Verknüpfen des ersten Übereinstimmungsmaßes mit dem zweiten Übereinstimmungsmaß ansprechend auf den Eintritt eines Ereignisses in der Umgebung des Mobilgerätes durchgeführt werden kann.

Die Änderung zumindest einer Sensorgröße kann beispielsweise mittels eines Vergleichs der Sensorgröße mit einer vorbestimmten Schranke erkannt werden. Überschreitet beispielsweise eine Beschleunigung des Mobilgerätes die vorbestimmte Schranke, so kann das Verknüpfen des ersten Übereinstimmungsmaßes mit dem zweiten Übereinstimmungsmaß ansprechend auf das Überschreiten der vorbestimmten Schranke in Abhängigkeit von der Änderung der Beschleunigung des Mobilgerätes durchgeführt werden.

Gemäß einer Ausführungsform umfasst das Verfahren ferner ein Erfassen eines Passwortes und ein Vergleichen des Passwortes mit einem vorbestimmten Referenzpasswort zum Authentifizieren des Benutzers, falls sich das Gesamtübereinstimmungsmaß von dem vorbestimmten Schwellwert unterscheidet. Dadurch wird der Vorteil erreicht, dass das Authentifizieren des Benutzers des Mobilgerätes effizient durchgeführt werden kann.

Das Passwort kann eine nummerische Zahlenfolge, beispielsweise eine Persönliche Identifikationsnummer (PIN), oder eine Zeichenkette sein. Das vorbestimmte Referenzpasswort kann in einem Speicher des Mobilgerätes vorgespeichert sein. Das Erfassen des Passwortes kann beispielweise mittels einer Tastatur oder Bildschirmtastatur des Mobilgerätes erfolgen. Bei einem Übereinstimmen des Passwortes mit dem vorbestimmten Referenzpasswort kann der Benutzer authentifiziert sein.

Das Gesamtübereinstimmungsmaß kann sich beispielsweise dann von dem vorbestimmten Schwellwert unterscheiden, wenn das Gesamtübereinstimmungsmaß den vorbestimmten Schwellwert überschreitet oder unterschreitet.

Gemäß einer Ausführungsform umfasst das Verfahren ferner ein Erfassen eines weiteren Passwortes und ein Vergleichen des weiteren Passwortes mit einem weiteren vorbestimmten Referenzpasswort zum Authentifizieren des Benutzers, falls sich das Gesamtübereinstimmungsmaß von einem weiteren vorbestimmten Schwellwert unterscheidet. Dadurch wird der Vorteil erreicht, dass das Authentifizieren des Benutzers des Mobilgerätes effizient durchgeführt werden kann.

Das weitere Passwort kann eine nummerische Zahlenfolge, beispielsweise eine Persönliche Identifikationsnummer (PIN), oder eine Zeichenkette sein. Das weitere vorbestimmte Referenzpasswort kann in einem Speicher des Mobilgerätes vorgespeichert sein. Das Erfassen des weiteren Passwortes kann beispielweise mittels einer Tastatur oder Bildschirmtastatur des Mobilgerätes erfolgen. Bei einem Übereinstimmen des weiteren Passwortes mit dem weiteren vorbestimmten Referenzpasswort kann der Benutzer authentifiziert sein.

Das Gesamtübereinstimmungsmaß kann sich beispielsweise dann von dem weiteren vorbestimmten Schwellwert unterscheiden, wenn das Gesamtübereinstimmungsmaß den weiteren vorbestimmten Schwellwert überschreitet oder unterschreitet.

Der vorbestimmte Schwellwert und der weitere vorbestimmte Schwellwert können unterschiedlich sein. Der vorbestimmte Schwellwert kann beispielsweise einen Wert von 0,66 aufweisen. Der weitere vorbestimmte Schwellwert kann beispielsweise einen Wert von 0,33 aufweisen. Das Gesamtübereinstimmungsmaß kann somit mit dem vorbestimmten Schwellwert und dem weiteren vorbestimmten Schwellwert verglichen werden.

Ist das Gesamtübereinstimmungsmaß größer als der vorbestimmte Schwellwert und der weitere vorbestimmte Schwellwert, kann beispielsweise auf ein Erfassen und Vergleichen eines Passwortes verzichtet werden. Ist das Gesamtübereinstimmungsmaß kleiner als der vorbestimmte Schwellwert und größer als der weitere vorbestimmte Schwellwert, kann beispielsweise ein kurzes Passwort erfasst und verglichen werden. Ist das Gesamtübereinstimmungsmaß kleiner als der vorbestimmte Schwellwert und der weitere vorbestimmte Schwellwert, kann beispielsweise ein langes Passwort erfasst und verglichen werden.

Gemäß einer Ausführungsform kommuniziert das Mobilgerät über ein Kommunikationsnetzwerk mit einem Dienstserver, wobei das Gesamtübereinstimmungsmaß an den Dienstserver ausgesendet wird, und wobei das Vergleichen des Gesamtübereinstimmungsmaßes mit dem vorbestimmten Schwellwert durch den Dienstserver durchgeführt wird, um den Benutzer zu authentifizieren. Dadurch wird der Vorteil erreicht, dass ein Authentifizieren des Benutzers gegenüber dem Dienstserver durchgeführt werden kann.

Der Dienstserver kann eine elektronische Dienstleistung, beispielsweise eine Bankdienstleistung oder eine Suchdienstleistung, für den Benutzer des Mobilgerätes bereitstellen. Das Kommunikationsnetzwerk kann beispielsweise das Internet sein.

Gemäß einem zweiten Aspekt betrifft die Erfindung ein Mobilgerät zum Authentifizieren eines Benutzers des Mobilgerätes, mit einer Mehrzahl von Sensoren, welche ausgebildet sind, eine erste Sensorgröße und eine zweite Sensorgröße zu erfassen, und einem Prozessor, welcher ausgebildet ist, die erste Sensorgröße mit einer ersten Referenzgröße zu vergleichen, um ein erstes Übereinstimmungsmaß zwischen der ersten Sensorgröße und der ersten Referenzgröße zu erhalten, die zweite Sensorgröße mit einer zweiten Referenzgröße zu vergleichen, um ein zweites Übereinstimmungsmaß zwischen der zweiten Sensorgröße und der zweiten Referenzgröße zu erhalten, das erste Übereinstimmungsmaß mit dem zweiten Übereinstimmungsmaß zu verknüpfen, um ein Gesamtübereinstimmungsmaß zu erhalten, und das Gesamtübereinstimmungsmaßes mit einem vorbestimmten Schwellwert zu vergleichen, um den Benutzer zu authentifizieren. Dadurch wird der Vorteil erreicht, dass ein effizientes Authentifizieren des Benutzers des Mobilgerätes durchgeführt werden kann.

Die Mehrzahl von Sensoren können beispielsweise durch ein Mikrofon, eine Kamera, einen Fingerabdrucksensor, einen berührungsempfindlichen Bildschirm, ein satellitengestütztes Lokalisierungssystem, einen Magnetfeldsensor, einen Beschleunigungssensor, einen Helligkeitssensor, oder einen funkbasierten Abstandssensor gebildet sein. Der Prozessor kann ausgebildet sein, ein Computerprogramm auszuführen.

Das Verfahren zum Authentifizieren eines Benutzers kann mittels des Mobilgerätes zum Authentifizieren eines Benutzers ausgeführt werden. Weitere Merkmale des Mobilgerätes zum Authentifizieren eines Benutzers ergeben sich unmittelbar aus der Funktionalität des Verfahrens zum Authentifizieren eines Benutzers.

Gemäß einer Ausführungsform umfasst das Mobilgerät ferner eine Kommunikationsschnittstelle, welche ausgebildet ist, über ein Kommunikationsnetzwerk mit einem Dienstserver zu kommunizieren, wobei die Kommunikationsschnittstelle ferner ausgebildet ist, das Gesamtübereinstimmungsmaß an den Dienstserver auszusenden. Dadurch wird der Vorteil erreicht, dass ein Authentifizieren des Benutzers gegenüber dem Dienstserver durchgeführt werden kann.

Die Kommunikationsschnittstelle kann ausgebildet sein, eine drahtlose Kommunikationsverbindung zwischen dem Mobilgerät und dem Dienstserver aufzubauen. Die Kommunikationsschnittstelle kann ferner ausgebildet sein, eine verschlüsselte und/oder authentifizierte Kommunikationsverbindung zwischen dem Mobilgerät und dem Dienstserver aufzubauen.

Gemäß einem dritten Aspekt betrifft die Erfindung ein Computerprogramm mit einem Programmcode zum Ausführen des Verfahrens zum Authentifizieren eines Benutzers eines Mobilgerätes, wenn der Programmcode auf einem Computer ausgeführt wird. Dadurch wird der Vorteil erreicht, dass das Verfahren automatisiert und wiederholbar ausgeführt werden kann.

Das Computerprogramm kann in Form eines maschinen-lesbaren Programmcodes vorliegen. Der Programmcode kann eine Folge von Befehlen für einen Prozessor des Computers umfassen. Der Prozessor kann ausgebildet sein, den Programmcode auszuführen.

Die Erfindung kann in Hardware und/oder Software realisiert werden.

Weitere Ausführungsbeispiele werden Bezug nehmend auf die beiliegenden Zeichnungen näher erläutert. Es zeigen:

Fig. 1    ein Diagramm eines Verfahrens zum Authentifizieren eines Benutzers eines Mobilgerätes gemäß einer Ausführungsform;

Fig. 2    ein Diagramm eines Mobilgerätes zum Authentifizieren eines Benutzers des Mobilgerätes gemäß einer Ausführungsform;

Fig. 3    ein Diagramm eines Systems zum Authentifizieren eines Benutzers eines Mobilgerätes gegenüber einem Dienstserver gemäß einer Ausführungsform; und

Fig. 4    ein Diagramm einer Aktualisierung eines ersten Übereinstimmungsmaßes und eines zweiten Übereinstimmungsmaßes gemäß einer Ausführungsform.

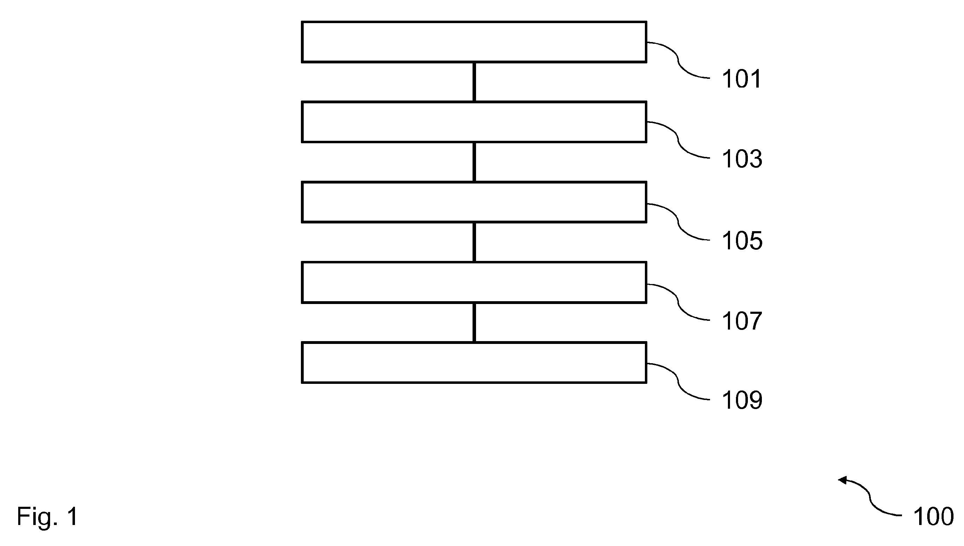

Fig. 1 zeigt ein Diagramm eines Verfahrens 100 zum Authentifizieren eines Benutzers eines Mobilgerätes gemäß einer Ausführungsform. Das Mobilgerät weist mehrere Sensoren zur Erfassung von Sensorgrößen auf.

Das Verfahren 100 umfasst ein Erfassen 101 einer ersten Sensorgröße und einer zweiten Sensorgröße mittels der Sensoren des Mobilgerätes, ein Vergleichen 103 der ersten Sensorgröße mit einer ersten Referenzgröße, um ein erstes Übereinstimmungsmaß zwischen der ersten Sensorgröße und der ersten Referenzgröße zu erhalten, ein Vergleichen 105 der zweiten Sensorgröße mit einer zweiten Referenzgröße, um ein zweites Übereinstimmungsmaß zwischen der zweiten Sensorgröße und der zweiten Referenzgröße zu erhalten, ein Verknüpfen 107 des ersten Übereinstimmungsmaßes mit dem zweiten Übereinstimmungsmaß, um ein Gesamtübereinstimmungsmaß zu erhalten, und ein Vergleichen 109 des Gesamtübereinstimmungsmaßes mit einem vorbestimmten Schwellwert, um den Benutzer zu authentifizieren.

Das Mobilgerät kann ein Mobiltelefon, beispielsweise ein Smartphone sein. Die Sensoren des Mobilgerätes können ausgebildet sein, die erste Sensorgröße und die zweite Sensorgröße zu erfassen. Die erste Sensorgröße und die zweite Sensorgröße können eine physikalische Umgebung des Mobilgerätes, beispielsweise eine geographische Position des Mobilgerätes oder eine Beschleunigung des Mobilgerätes, repräsentieren. Die erste Sensorgröße und die zweite Sensorgröße können ferner Eigenschaften des Benutzers, beispielsweise ein Stimmmuster des Benutzers oder ein Gesichtsbild des Benutzers, repräsentieren. Die erste Referenzgröße und die zweite Referenzgröße können in einem Speicher des Mobilgerätes vorgespeichert sein.

Das erste Übereinstimmungsmaß und das zweite Übereinstimmungsmaß können eine Zahl aus einem vorbestimmten Zahlenbereich, beispielsweise aus dem Zahlenbereich zwischen 0 und 1, sein. Das erste Übereinstimmungsmaß und das zweite Übereinstimmungsmaß können beispielsweise einen Wert von 0,3 oder 0,8 aufweisen. Das erste Übereinstimmungsmaß und das zweite Übereinstimmungsmaß können ein Maß für eine Übereinstimmung, Ähnlichkeit oder Gleichheit sein. Das erste Übereinstimmungsmaß und das zweite Übereinstimmungsmaß können eine Wahrscheinlichkeit für eine erkannte Identität des Benutzers darstellen.

Das Gesamtübereinstimmungsmaß kann eine Zahl aus einem vorbestimmten Zahlenbereich, beispielsweise aus dem Zahlenbereich zwischen 0 und 1, sein. Das Gesamtübereinstimmungsmaß kann beispielsweise einen Wert von 0,65 aufweisen. Das Gesamtübereinstimmungsmaß kann ferner auf einen vorbestimmten Zahlenbereich normiert sein. Der vorbestimmte Schwellwert kann beispielsweise einen Wert von 0,5 aufweisen. Der vorbestimmte Schwellwert kann in einem Speicher des Mobilgerätes vorgespeichert sein.

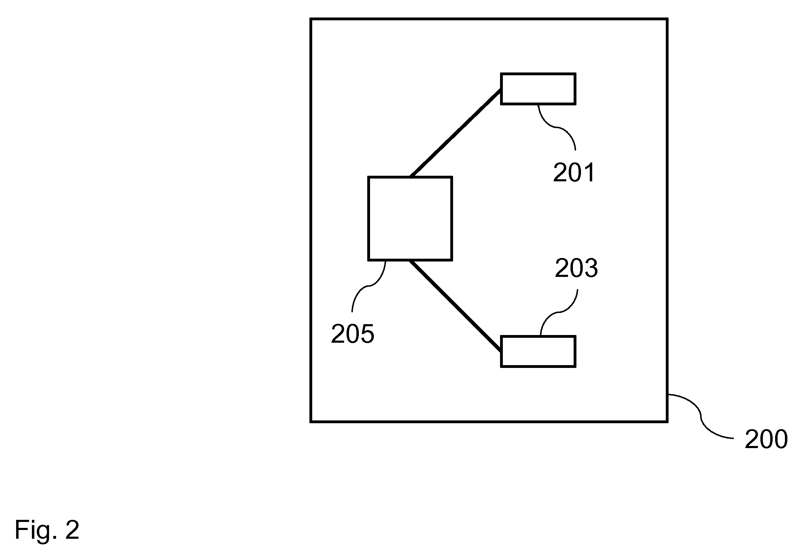

Fig. 2 zeigt ein Diagramm eines Mobilgerätes 200 zum Authentifizieren eines Benutzers des Mobilgerätes 200 gemäß einer Ausführungsform.

Das Mobilgerät 200 umfasst eine Mehrzahl von Sensoren 201, 203, welche ausgebildet sind, eine erste Sensorgröße und eine zweite Sensorgröße zu erfassen, und einen Prozessor 205, welcher ausgebildet ist, die erste Sensorgröße mit einer ersten Referenzgröße zu vergleichen, um ein erstes Übereinstimmungsmaß zwischen der ersten Sensorgröße und der ersten Referenzgröße zu erhalten, die zweite Sensorgröße mit einer zweiten Referenzgröße zu vergleichen, um ein zweites Übereinstimmungsmaß zwischen der zweiten Sensorgröße und der zweiten Referenzgröße zu erhalten, das erste Übereinstimmungsmaß mit dem zweiten Übereinstimmungsmaß zu verknüpfen, um ein Gesamtübereinstimmungsmaß zu erhalten, und das Gesamtübereinstimmungsmaßes mit einem vorbestimmten Schwellwert zu vergleichen, um den Benutzer zu authentifizieren.

Die Mehrzahl von Sensoren 201, 203 können beispielweise durch ein Mikrofon, eine Kamera, einen Fingerabdrucksensor, einen berührungsempfindlichen Bildschirm, ein satellitengestütztes Lokalisierungssystem, einen Magnetfeldsensor, einen Beschleunigungssensor, einen Helligkeitssensor, oder einen funkbasierten Abstandssensor gebildet sein. Der Prozessor 205 kann ausgebildet sein, ein Computerprogramm auszuführen.

Das Verfahren zum Authentifizieren eines Benutzers kann mittels des Mobilgerätes 200 zum Authentifizieren eines Benutzers ausgeführt werden. Weitere Merkmale des Mobilgerätes 200 zum Authentifizieren eines Benutzers ergeben sich unmittelbar aus der Funktionalität des Verfahrens zum Authentifizieren eines Benutzers.

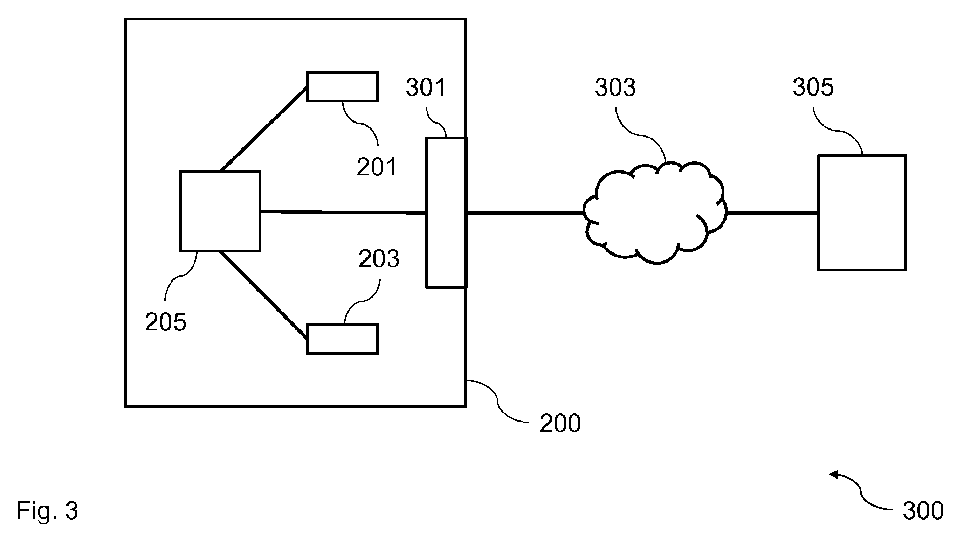

Fig. 3 zeigt ein Diagramm eines Systems 300 zum Authentifizieren eines Benutzers eines Mobilgerätes 200 gegenüber einem Dienstserver 305 gemäß einer Ausführungsform.

Das Mobilgerät 200 umfasst eine Mehrzahl von Sensoren 201, 203, einen Prozessor 205 und eine Kommunikationsschnittstelle 301. Die Kommunikationsschnittstelle 301 ist über das Kommunikationsnetzwerk 303 mit dem Dienstserver 305 verbunden.

Die Kommunikationsschnittstelle 301 kann ausgebildet sein, eine drahtlose Kommunikationsverbindung zwischen dem Mobilgerät 200 und dem Dienstserver 305 aufzubauen. Die Kommunikationsschnittstelle 301 kann ferner ausgebildet sein, eine verschlüsselte und/oder authentifizierte Kommunikationsverbindung zwischen dem Mobilgerät 200 und dem Dienstserver 305 aufzubauen. Das Kommunikationsnetzwerk 303 kann beispielsweise das Internet sein. Der Dienstserver 305 kann eine elektronische Dienstleistung, beispielsweise eine Bankdienstleistung oder eine Suchdienstleistung, für den Benutzer des Mobilgerätes 200 bereitstellen.

Das Mobilgerät 200 kann über das Kommunikationsnetzwerk 303 mit dem Dienstserver 305 kommunizieren, wobei das Gesamtübereinstimmungsmaß an den Dienstserver 305 ausgesendet werden kann, und wobei das Vergleichen des Gesamtübereinstimmungsmaßes mit dem vorbestimmten Schwellwert durch den Dienstserver 305 durchgeführt werden kann, um den Benutzer zu authentifizieren. Somit kann der Benutzer des Mobilgerätes 200 gegenüber dem Dienstserver 305 authentifiziert werden.

Im mobilen Umfeld, aber nicht nur dort, wird der Zugang zu Diensten oder Daten in der Regel durch ein Passwort oder eine nummerische PIN als Geheimnis geschützt. Nach Eingabe des Passwortes oder des Geheimnisses und der Überprüfung desselben durch Vergleich mit einem vorher hinterlegten Referenzpasswort oder Referenzwert kann der Zugang zu den Diensten oder Daten freigegeben werden.

An Stelle eines Passwortes oder Geheimnisses kann auch eine Sensorgröße oder ein biometrisches Merkmal verwendet werden. Dies kann beispielsweise durch einen Fingerabdruckleser eines Mobilgerätes oder eine Gesichtsfreigabefunktion bei Mobilgeräten umgesetzt werden. Bei letzterem kann beispielsweise eine Front-Kamera des Mobilgerätes verwendet werden, um eine Foto- oder Video-Aufnahme des Benutzers anzufertigen und zu prüfen, ob es sich bei dem Benutzer des Gerätes um den rechtmäßigen Besitzer oder Eigentümer handelt und in diesem Fall beispielsweise die Bildschirmsperre aufzuheben.

Die Verwendung von Passwörtern oder Geheimnissen zur Authentifizierung ist, besonders im mobilen Umfeld, nicht besonders komfortabel. Da Passwörter, die hohen Anforderungen gerecht werden, nur umständlich auf mobilen Geräten eingegeben werden können, tendieren Benutzer dazu, einfache Passwörter oder kurze PINs zu verwenden. Statische biometrische Merkmale, beispielsweise Fingerabdrücke, sind häufig ebenfalls unkomfortabel. Zudem können statische biometrische Merkmal zumeist nicht geändert werden, im Gegensatz zu beispielsweise einem Passwort.

Mobilgeräte oder Mobiltelefone können über ein breites Spektrum an Sensoren verfügen, beispielsweise für Helligkeit, Berührungen beispielsweise mittels eines berührungsempfindlichen Bildschirms oder Touchscreens, Bewegung und/oder Beschleunigung, Position beispielsweise mittels GPS, Lage im Raum, Bilder beispielsweise mittels einer Kamera, Fingerabdruck, und/oder Bluetooth.

Mit Hilfe dieser Sensoren kann das Mobilgerät oder Mobiltelefon eine Vielzahl statischer und dynamischer Sensorgrößen oder Merkmale, beispielsweise biometrische Merkmale, des Benutzers erfassen, beispielsweise eine Stimme, ein Aussehen in Form von Gesicht und Mimik, typische Eingabemuster bei Benutzung einer Bildschirmtastatur, und/oder einen Aufenthaltsort.

Das Mobilgerät oder Mobiltelefon kann beim Durchlaufen einer Lernphase charakteristische, beispielsweise biometrische, Referenzgrößen oder Merkmale des Besitzers oder Eigentümers erlernen, beispielsweise einen Aufenthaltsort zu einer bestimmten Tageszeit, beispielsweise Arbeitsplatz oder Wohnung, einen zurückgelegten Weg zu einer bestimmten Tageszeit, beispielsweise den Weg zum und/oder vom Arbeitsplatz, eine Stimme, ein Gesicht, Eingabemuster bei Benutzung einer Bildschirmtastatur, und/oder eine Nähe eines bestimmten Bluetooth-Geräts, beispielsweise einer Smartwatch.

Durch Aggregation dieser Referenzgrößen oder Werte kann das Mobilgerät oder Mobiltelefon nach Abschluss der Lernphase ein Übereinstimmungsmaß oder eine Wahrscheinlichkeit dafür ermitteln, dass der aktuelle Benutzer auch der Eigentümer oder Besitzer des Geräts und damit der befugte Benutzer ist. Analog ist es möglich, verschiedene Benutzer zu erkennen.

Anhand eines Gesamtübereinstimmungsmaßes oder eines aggregierten Werts kann das Mobilgerät oder Mobiltelefon unterschiedlich hohes Vertrauen in die Identität des aktuellen Benutzers oder Besitzers haben und Maßnahmen entsprechend anpassen. Ist es sich gewiss, den aktuellen Benutzer zu kennen, kann es beispielsweise den Zugriff auf sensible Daten, wie den Passwortspeicher eines Browsers, ohne weitere Überprüfung freigeben oder erst, ebenfalls in Abhängigkeit vom Vertrauen, ein kurzes oder langes Passwort anfordern.

Die Berechnung des Gesamtübereinstimmungsmaßes oder der Wahrscheinlichkeit kann beispielsweise folgendermaßen erfolgen. Die Übereinstimmungsmaße oder Werte der Sensoren $S_1$ bis $S_n$ können eine Wahrscheinlichkeit $P_1$ bis $P_n$ dafür angeben, dass der Benutzer oder Besitzer U des Mobilgerätes oder Gerätes zum Zeitpunkt t die Identität I hat. Jedem Sensor $S_n$ kann ein Gewichtungsfaktor oder eine Gewichtung $W_n$ zugeordnet sein, welche den Beitrag des Sensors zum Gesamtübereinstimmungsmaß oder zur aggregierten Wahrscheinlichkeit P angibt. Das Gesamtübereinstimmungsmaß oder die aggregierte Wahrscheinlichkeit berechnet sich dann zu

$$P(t) = \sum_1^n W_n * P_n(t)$$

Eine ereignisabhängige Berechnung der Gewichtung kann folgendermaßen durchgeführt werden. Die Gewichtung eines Sensors kann in Abhängigkeit von einem erkannten Ereignis verändert werden. So kann beispielsweise der Beschleunigungssensor regelmäßig nur einen kleinen Beitrag zum Gesamtübereinstimmungsmaß oder P liefern, der aber größer wird, wenn erkannt wird, dass das Mobilgerät oder Gerät weitergegeben wurde oder heruntergefallen ist. In diesem Fall handelt es sich nicht um statische Gewichtungsfaktoren oder Werte $W_n$, sondern um ereignisabhängige Funktionen $W_n(e)$, so dass sich für obige Formel ergibt:

$$P(t) = \sum_1^n W_n(e) * P_n(t)$$

Die Berechnung der Gewichtung kann nach einer Korrelation von Sensorgrößen oder Sensorwerten durchgeführt werden. Die Gewichtung eines Sensors kann auch in Abhängigkeit anderer Sensorgrößen oder Sensorwerte erfolgen. Wenn beispielsweise sowohl Kamera als auch Mikrofon das Gesicht und/oder die Stimme identifiziert haben, kann der Beitrag beider Sensoren höher gewichtet werden als in Fällen, in denen nur einer der Sensoren den Benutzer identifiziert hat. Ebenso kann das Mobilgerät oder das Mobiltelefon misstrauisch werden, wenn beide Sensoren unterschiedliche Identitäten melden.

Die Aktualisierung des Gesamtübereinstimmungsmaßes oder der aggregierten Wahrscheinlichkeit kann folgendermaßen durchgeführt werden. Das Gesamtübereinstimmungsmaß oder der Wert P kann aktuell gehalten werden, damit das Mobilgerät oder Mobiltelefon beispielsweise bei längerer Inaktivität des Benutzers oder einer Weitergabe an eine andere Person reagieren und gegebenenfalls gewährte Zugriffrechte entziehen kann. Die Aktualisierung kann in festen Intervallen, oder in sensorspezifischen Intervallen oder ereignisbezogen erfolgen.

Die Aktualisierung kann in festen Intervallen durchgeführt werden. Bei der Aktualisierung in festen Intervallen können in regelmäßigen Abständen $\Delta t$ die Übereinstimmungsmaße oder Werte $P_n(t)$ und gegebenenfalls $W_n(e)$ neu ermittelt und ein neues Gesamtübereinstimmungsmaß oder ein neuer Wahrscheinlichkeitswert $P(t)$ berechnet werden. Gemäß einer Ausführungsform bildet der zeitliche Abstand $\Delta t$ die vorbestimmte Periodendauer einer zeitlich periodischen Aktualisierung.

Die Aktualisierung kann in sensorspezifischen Intervallen durchgeführt werden. In diesem Fall kann jedem Sensor $S_n$ eine Gültigkeitszeitdauer oder Halbwertszeit $\lambda n$ zugeordnet werden. Nach Ablauf dieser Zeit können die Übereinstimmungsmaße oder Werte $P_n$ und Gewichtungsfaktoren $W_n$ dieses Sensors neu berechnet und das Gesamtübereinstimmungsmaß oder der Gesamtwert P aktualisiert werden.

Die Aktualisierung kann ereignisbezogen durchgeführt werden. Nach Bestimmung oder Berechnung eines initialen Gesamtübereinstimmungsmaßes oder Werts P können bei Erkennen eines bestimmten Ereignisses durch einen Sensor der Gewichtungsfaktor oder der Beitrag eines oder aller Sensoren neu ermittelt und das Gesamtübereinstimmungsmaß oder der Wert P aktualisiert werden. Somit können beispielsweise der Beschleunigungssensor oder die Kamera erkennen, ob das Mobilgerät oder Mobiltelefon weitergegeben wurde und in diesem Fall eine Neubestimmung oder Neuberechnung auslösen.

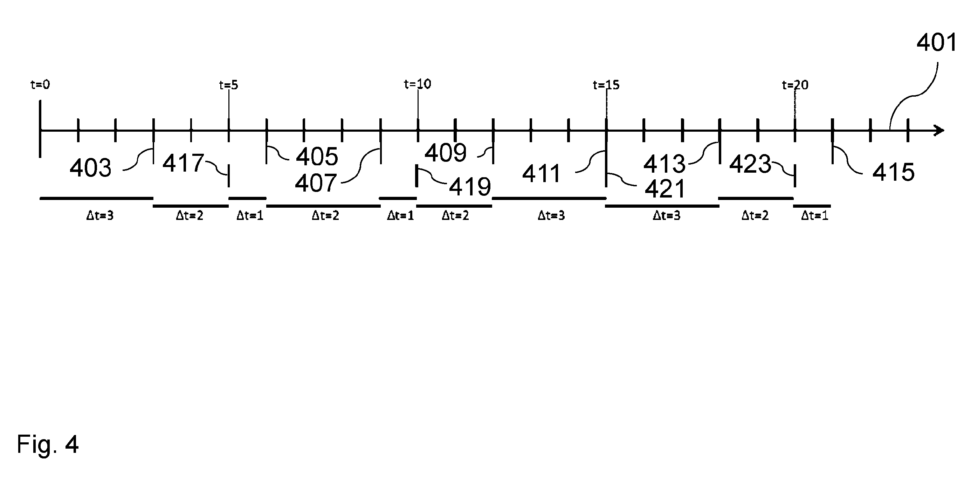

Fig. 4 zeigt ein Diagramm einer Aktualisierung eines ersten Übereinstimmungsmaßes und eines zweiten Übereinstimmungsmaßes gemäß einer Ausführungsform. Ein Zeitstrahl 401 zeigt Aktualisierungszeitpunkte 403-423 in Sekunden an. Eine Aktualisierung des ersten Übereinstimmungsmaßes kann an den Aktualisierungszeitpunkten 403-415 erfolgen. Eine Aktualisierung des zweiten Übereinstimmungsmaßes kann an den Aktualisierungszeitpunkten 417-423 erfolgen. Ferner kann eine Aktualisierung des ersten Gewichtungsfaktors an den Aktualisierungszeitpunkten 403-415 und eine Aktualisierung des zweiten Gewichtungsfaktors an den Aktualisierungszeitpunkten 417-423 durchgeführt werden. Darüber hinaus kann ein Erfassen der ersten Sensorgröße an den Aktualisierungszeitpunkten 403-415 und ein Erfassen der zweiten Sensorgröße an den Aktualisierungszeitpunkten 417-423 durchgeführt werden. Die Aktualisierungszeitpunkte 403-415 weisen eine Periodendauer von 3 Sekunden auf. Die Aktualisierungszeitpunkte 417-423 weisen eine Periodendauer von 5 Sekunden auf.

Eine Aktualisierung des Gesamtübereinstimmungsmaßes kann jeweils an einem der Aktualisierungszeitpunkte 403-423 durchgeführt werden. Die Aktualisierung des Gesamtübereinstimmungsmaßes kann somit in regelmäßigen, jedoch ungleichen, Zeitabständen Δt durchgeführt werden.

Anhand des ermittelten Gesamtübereinstimmungsmaßes oder des ermittelten Wahrscheinlichkeitswerts kann das Mobilgerät oder Mobiltelefon entscheiden, den Zugang zu Diensten oder Daten ohne Passwort, beispielsweise aufgrund eines hohen Werts, nach Eingabe einer kurzen PIN, beispielsweise aufgrund eines mittleren Werts, oder nach Eingabe eines langen Passworts, beispielsweise aufgrund eines niedrigen Werts, freizugeben. Dadurch kann sowohl die Benutzerfreundlichkeit als auch die Effizienz erhöht werden. Die Erhöhung der Effizienz kann sich aus der Kombination dynamischer und statischer Sensorgrößen oder biometrischer Merkmale ergeben. Die Erhöhung der Benutzerfreundlichkeit kann sich ergeben, weil Passworteingaben seltener werden können.

Gemäß einer Ausführungsform basiert die Erfindung auf einer Kombination einer Identifizierung mittels biometrischer Merkmale und einer Authentisierung oder Authentifizierung auf Basis der Identität des Benutzers und der Güte der Identifizierung. Die Identifizierung kann zum Bestimmen der Identität des Benutzers vorgesehen sein. Die Authentisierung oder Authentifizierung kann zum Gewähren oder Verweigern eines Zugriffs des Benutzers auf das Mobilgerät vorgesehen sein.

Gemäß einer Ausführungsform wird das Verfahren für einen Schutz sensibler Daten, beispielsweise Daten in einem Passwortspeicher des Mobilgeräts, eingesetzt.

Gemäß einer Ausführungsform können mehr als zwei Sensorgrößen erfasst und verknüpft werden, um ein Gesamtübereinstimmungsmaß zu erhalten.

Gemäß einer Ausführungsform ist ein Gewichtungsfaktor ein Maß für ein Vertrauen in eine Sensorgröße oder einen Sensor.

Gemäß einer Ausführungsform ist das Erfassen eines Passworts eine alternative Authentisierungsform, wenn kein hohes Vertrauen in die Identität des Benutzers besteht und das Vertrauen in die Identität des Benutzers nicht für die Authentifizierung herangezogen werden kann.

**BEZUGSZEICHENLISTE**

| | |
|---|---|
| 100 | Verfahren zum Authentifizieren eines Benutzers eines Mobilgerätes |
| 101 | Erfassen einer ersten Sensorgröße und einer zweiten Sensorgröße |
| 103 | Vergleichen der ersten Sensorgröße mit einer ersten Referenzgröße |
| 105 | Vergleichen der zweiten Sensorgröße mit einer zweiten Referenzgröße |
| 107 | Verknüpfen des ersten Übereinstimmungsmaßes mit dem zweiten Übereinstimmungsmaß |
| 109 | Vergleichen des Gesamtübereinstimmungsmaßes mit einem vorbestimmten Schwellwert |
| 200 | Mobilgerät zum Authentifizieren eines Benutzers des Mobilgerätes |
| 201 | Sensor |
| 203 | Sensor |
| 205 | Prozessor |
| 300 | System zum Authentifizieren eines Benutzers des Mobilgerätes |
| 301 | Kommunikationsschnittstelle |
| 303 | Kommunikationsnetzwerk |
| 305 | Dienstserver |
| 401 | Zeitstrahl |
| 403 | Aktualisierungszeitpunkt |
| 405 | Aktualisierungszeitpunkt |
| 407 | Aktualisierungszeitpunkt |
| 409 | Aktualisierungszeitpunkt |
| 411 | Aktualisierungszeitpunkt |
| 413 | Aktualisierungszeitpunkt |
| 415 | Aktualisierungszeitpunkt |
| 417 | Aktualisierungszeitpunkt |
| 419 | Aktualisierungszeitpunkt |
| 421 | Aktualisierungszeitpunkt |
| 423 | Aktualisierungszeitpunkt |

**Patentansprüche**

1. Verfahren (100) zum Authentifizieren eines Benutzers eines Mobilgerätes (200), wobei das Mobilgerät (200) mehrere Sensoren (201, 203) zur Erfassung von Sensorgrößen aufweist, mit:

    Erfassen (101) einer ersten Sensorgröße und einer zweiten Sensorgröße mittels der Sensoren (201, 203) des Mobilgerätes (200);
    Vergleichen (103) der ersten Sensorgröße mit einer ersten Referenzgröße, um ein erstes Übereinstimmungsmaß zwischen der ersten Sensorgröße und der ersten Referenzgröße zu erhalten;
    Vergleichen (105) der zweiten Sensorgröße mit einer zweiten Referenzgröße, um ein zweites Übereinstimmungsmaß zwischen der zweiten Sensorgröße und der zweiten Referenzgröße zu erhalten; wobei das Verfahren durch die folgenden Schritte charakterisiert wird:

Verknüpfen (107) des ersten Übereinstimmungsmaßes mit dem zweiten Übereinstimmungsmaß, um ein Gesamtübereinstimmungsmaß zu erhalten; und
Vergleichen (109) des Gesamtübereinstimmungsmaßes mit einem vorbestimmten Schwellwert, um den Benutzer zu authentifizieren.

2. Verfahren (100) nach Anspruch 1, wobei die erste Sensorgröße oder die zweite Sensorgröße eine der folgenden Sensorgrößen ist: ein Stimmmuster des Benutzers, ein Gesichtsbild des Benutzers, ein Fingerabdruck des Benutzers, ein Tastatureingabeverhalten des Benutzers, eine geographische Position des Mobilgerätes (200), eine Raumlage des Mobilgerätes (200), eine Beschleunigung des Mobilgerätes (200), eine Helligkeit einer Umgebung des Mobilgerätes (200), oder ein Abstand des Mobilgerätes (200) zu dem Benutzer.

3. Verfahren (100) nach einem der vorstehenden Ansprüche, wobei die erste Referenzgröße oder die zweite Referenzgröße zeitabhängig ist oder in Abhängigkeit von der Zeit, insbesondere durch das Mobilgerät (200), verändert oder adaptiert wird.

4. Verfahren (100) nach einem der vorstehenden Ansprüche, wobei das Verknüpfen (107) des ersten Übereinstimmungsmaßes mit dem zweiten Übereinstimmungsmaß ein Gewichten des ersten Übereinstimmungsmaßes mit einem ersten Gewichtungsfaktor und ein Gewichten des zweiten Übereinstimmungsmaßes mit einem zweiten Gewichtungsfaktor umfasst.

5. Verfahren (100) nach Anspruch 4, wobei der erste Gewichtungsfaktor oder der zweite Gewichtungsfaktor von dem ersten Übereinstimmungsmaß und dem zweiten Übereinstimmungsmaß abhängig ist oder in Abhängigkeit von dem ersten Übereinstimmungsmaß und dem zweiten Übereinstimmungsmaß bestimmt wird.

6. Verfahren (100) nach Anspruch 4 oder 5, wobei der erste Gewichtungsfaktor oder der zweite Gewichtungsfaktor in Abhängigkeit von einer Änderung zumindest einer Sensorgröße bestimmt wird.

7. Verfahren (100) nach einem der vorstehenden Ansprüche, wobei das Verknüpfen (107) des ersten Übereinstimmungsmaßes mit dem zweiten Übereinstimmungsmaß ein Bestimmen einer Summe des ersten Übereinstimmungsmaßes und des zweiten Übereinstimmungsmaßes umfasst.

8. Verfahren (100) nach einem der vorstehenden Ansprüche, wobei das Erfassen (101) der ersten Sensorgröße und der zweiten Sensorgröße, das Vergleichen (103) der ersten Sensorgröße mit der ersten Referenzgröße, das Vergleichen (105) der zweiten Sensorgröße mit einer zweiten Referenzgröße, und das Verknüpfen (107) des ersten Übereinstimmungsmaßes mit dem zweiten Übereinstimmungsmaß zeitlich periodisch mit einer vorbestimmten Periodendauer durchgeführt werden.

9. Verfahren (100) nach Anspruch 8, wobei die erste Sensorgröße oder die zweite Sensorgröße innerhalb einer vorbestimmten Gültigkeitszeitdauer gültig sind, und wobei die vorbestimmte Periodendauer der vorbestimmten Gültigkeitszeitdauer entspricht.

10. Verfahren (100) nach einem der vorstehenden Ansprüche, wobei das Verknüpfen (107) des ersten Übereinstimmungsmaßes mit dem zweiten Übereinstimmungsmaß in Abhängigkeit von einer Änderung zumindest einer Sensorgröße durchgeführt wird.

11. Verfahren (100) nach einem der vorstehenden Ansprüche, wobei das Verfahren (100) ferner ein Erfassen eines Passwortes und ein Vergleichen des Passwortes mit einem vorbestimmten Referenzpasswort zum Authentifizieren des Benutzers umfasst, falls sich das Gesamtübereinstimmungsmaß von dem vorbestimmten Schwellwert unterscheidet.

12. Verfahren (100) nach einem der vorstehenden Ansprüche, wobei das Mobilgerät (200) über ein Kommunikationsnetzwerk (303) mit einem Dienstserver (305) kommuniziert, wobei das Gesamtübereinstimmungsmaß an den Dienstserver (305) ausgesendet wird, und wobei das Vergleichen (109) des Gesamtübereinstimmungsmaßes mit dem vorbestimmten Schwellwert durch den Dienstserver (305) durchgeführt wird, um den Benutzer zu authentifizieren.

13. Mobilgerät (200) zum Authentifizieren eines Benutzers des Mobilgerätes (200), mit:

einer Mehrzahl von Sensoren (201, 203), welche ausgebildet sind, eine erste Sensorgröße und eine zweite Sensorgröße zu erfassen; und
einem Prozessor (205), welcher ausgebildet ist, die erste Sensorgröße mit einer ersten Referenzgröße zu vergleichen, um ein erstes Übereinstimmungsmaß zwischen der ersten Sensorgröße und der ersten Referenzgröße zu erhalten, die zweite Sensorgröße mit einer zweiten Referenzgröße zu vergleichen, um ein zweites Übereinstimmungsmaß zwischen der zweiten Sensorgröße und der zweiten Referenzgröße zu erhalten, das erste Übereinstimmungsmaß mit dem zweiten Übereinstimmungsmaß zu verknüpfen, um ein Gesamtübereinstimmungsmaß zu erhalten, und das Gesamtübereinstimmungsmaßes mit einem vorbestimmten Schwellwert zu vergleichen, um den Benutzer zu authentifizieren.

14. Mobilgerät (200) nach Anspruch 13, welches ferner eine Kommunikationsschnittstelle (301) umfasst, welche ausgebildet ist, über ein Kommunikationsnetzwerk (303) mit einem Dienstserver (305) zu kommunizieren, und wobei die Kommunikationsschnittstelle (301) ferner ausgebildet ist, das Gesamtübereinstimmungsmaß an den Dienstserver (305) auszusenden.

15. Computerprogramm mit einem Programmcode zum Ausführen des Verfahrens (100) nach einem der Ansprüche 1 bis 12, wenn der Programmcode auf einem Computer ausgeführt wird.

**Claims**

1. Method (100) for identifying a user of a mobile device (200), wherein the mobile device (200) has several sensors (201, 203) for detecting sensor quantities, comprising:

   detecting (101) a first sensor quantity and a second sensor quantity by means of the sensors (202, 203) of the mobile device (200);
   comparing (103) the first sensor quantity with a first reference quantity in order to obtain a first matching measure between the first sensor quantity and the first reference quantity;
   comparing (105) the second sensor quantity with a second reference quantity in order to obtain a second matching measure between the second sensor quantity and the second reference quantity, wherein the method is **characterized by** the following steps:

   combining (107) the first matching measure with the second matching measure in order to obtain a total matching measure; and
   comparing (109) the total matching measure to a predetermined threshold value in order to identify the user.

2. The method (100) according to claim 1, wherein the first sensor quantity or the second sensor quantity is one of the following sensor quantities: a voice pattern of the user, a facial picture of the user, a fingerprint of the user, a keyboard entry behavior of the user, a geographical position of the mobile device (200), a spatial position of the mobile device (200), an acceleration of the mobile device (200), a luminosity of an environment of the mobile device (200), or a distance of the mobile device (200) from the user.

3. The method (100) according to any one of the preceding claims, wherein the first reference quantity or the second reference quantity is time dependent or is changed or adapted as a function of time, especially by means of the mobile device (200).

4. The method (100) according to any one of the preceding claims, wherein combining (107) the first matching measure with the second matching measure comprises weighting the first matching measure with a first weighting factor and weighting the second matching measure with a second weighting factor.

5. The method (100) according to claim 4, wherein the first weighting factor or the second weighting factor is dependent on the first matching measure and on the second matching measure or is determined as a function of the first matching measure and of the second matching measure.

6. The method (100) according to claim 4 or 5, wherein the first weighting factor or the second weighting factor is determined as a function of a change of at least one sensor quantity.

7. The method (100) according to any one of the preceding claims, wherein combining (107) the first matching measure with the second matching measure comprises a determination of a sum of the first matching measure and of the second matching measure.

8. The method (100) according to any one of the preceding claims, wherein detecting (101) the first sensor quantity and the second sensor quantity, comparing (103) the first sensor quantity with the first reference quantity, comparing (105) the second sensor quantity with a second reference quantity, and combining (107) the first matching measure with the second matching measure are performed periodically in time with a predetermined period duration.

9. The method (100) according to claim 8, wherein the first sensor quantity or the second sensor quantity are valid during a predetermined time duration of validity, and wherein the predetermined period duration corresponds to the predetermined time duration of validity.

10. The method (100) according to any one of the preceding claims, wherein combining (107) the first matching measure with the second matching measure is performed as a function of a change of at least one sensor quantity.

**11.** The method (100) according to any one of the preceding claims, wherein the method (100) further comprises detecting a password and comparing the password with a predetermined reference password for identifying the user, if the total matching measure differs from the predetermined threshold value.

**12.** The method (100) according to any one of the preceding claims, wherein the mobile device (200) communicates with the a service server (305) via a communication network (303), wherein the total matching measure is sent to the service server (305), and wherein comparing (109) the total matching measure with the predetermined threshold value is performed by means of the service server (305) in order to identify the user.

**13.** Mobile device (200) for identifying a user of the mobile device (200), comprising:

a plurality of sensors (201, 203) which are configured to detect a first sensor quantity and a second quantity; and
a processor (205) which is configured to compare the first sensor quantity with a first reference quantity in order to obtain a first matching measure between the first sensor quantity and the first reference quantity, to compare the second sensor quantity with a second reference quantity in order to obtain a second matching measure between the second sensor quantity and the second reference quantity, to combine the first matching measure with the second matching measure in order to obtain a total matching measure, and to compare the total matching measure with a predetermined threshold value in order to identify the user.

**14.** The mobile device (200) according to claim 13, which further comprises a communication interface (301), which is configured to communicate with a service server (305) via a communication network (303), and wherein the communication interface (301) is further configured to send the total matching measure to the service server (305).

**15.** Computer program comprising a programming code for executing the method (100) according to any one of the claims 1 to 12, when the programming code is executed on a computer.

**Revendications**

**1.** Procédé (100) pour l'identification d'un utilisateur d'un appareil mobile (200), dans lequel l'appareil mobile (200) présente plusieurs capteurs (201, 203) pour détecter des grandeurs de capteur, comportant:

détecter (101) une première grandeur de capteur et une deuxième grandeur de capteur au moyen de capteurs (201, 203) de l'appareil mobile (200);
comparer (103) la première grandeur de capteur avec une première grandeur de référence pour obtenir une première mesure de correspondance entre la première grandeur de capteur et la première grandeur de référence;
comparer (105) la deuxième grandeur de capteur avec une deuxième grandeur de référence pour obtenir une deuxième mesure de correspondance entre la deuxième grandeur de capteur et la deuxième grandeur de référence; le procédé étant **caractérisé par** les étapes suivantes:

combiner (107) la première mesure de correspondance avec la deuxième mesure de correspondance pour obtenir une mesure de correspondance totale; et
comparer (109) la mesure de correspondance totale avec une valeur de seuil prédéterminée afin d'identifier l'utilisateur.

**2.** Procédé (100) selon la revendication 1, la première grandeur de capteur ou la deuxième grandeur de capteur étant l'une des grandeurs de capteur suivantes: un motif vocal de l'utilisateur, une photo du visage de l'utilisateur, une empreinte digitale de l'utilisateur, un comportement d'entrée au clavier de l'utilisateur, une position géographique de l'appareil mobile (200), une position spatiale de l'appareil mobile (200), une accélération de l'appareil mobile (200), une luminosité d'un environnement de l'appareil mobile (200) ou une distance entre l'appareil mobile (200) et l'utilisateur.

**3.** Procédé (100) selon l'une des revendications précédentes, la première grandeur de référence ou la deuxième grandeur de référence étant dépendante du temps ou étant changée ou adaptée en fonction du temps, en particulier par l'appareil mobile (200).

**4.** Procédé (100) selon l'une des revendications précédentes, dans lequel le fait de combiner (107) la première mesure de correspondance avec la deuxième mesure de correspondance comporte une pondération de la première mesure de correspondance avec un premier coefficient de pondération et une pondération de la deuxième mesure de correspondance avec un deuxième coefficient de pondération.

**5.** Procédé (100) selon la revendication 4, le premier coefficient de pondération ou le deuxième coefficient de pondération étant dépendant de la première mesure de correspondance et de la deuxième mesure de correspondance ou étant déterminé en fonction de la première mesure de correspondance et de la deuxième mesure de correspondance.

6. Procédé (100) selon la revendication 4 ou 5, le premier coefficient de pondération ou le deuxième coefficient de pondération étant déterminé en fonction d'une variation d'au moins une grandeur de capteur.

7. Procédé (100) selon l'une des revendications précédentes, dans lequel le fait de combiner (107) la première mesure de correspondance avec la deuxième mesure de correspondance comporte une détermination d'une somme de la première mesure de correspondance et de la deuxième mesure de correspondance.

8. Procédé (100) selon l'une des revendications précédentes, dans lequel le fait de détecter (101) la première grandeur de capteur et la deuxième grandeur de capteur, le fait de comparer (103) la première grandeur de capteur avec la première grandeur de référence, le fait de comparer (105) la deuxième grandeur de capteur avec une deuxième grandeur de référence et le fait de combiner (107) la première mesure de correspondance avec la deuxième mesure de correspondance sont effectués périodiquement dans le temps avec une durée de période prédéterminée.

9. Procédé (100) selon la revendication 8, la première grandeur de capteur ou la deuxième grandeur de capteur étant valides dans une période de validité prédéterminée et la durée de période prédéterminée correspondant à la période de validité prédéterminée.

10. Procédé (100) selon l'une des revendications précédentes, dans lequel le fait de combiner (107) la première mesure de correspondance avec la deuxième mesure de correspondance est effectué en fonction d'une variation d'au moins une grandeur de capteur.

11. Procédé (100) selon l'une des revendications précédentes, le procédé (100) comportant en outre une détection d'un mot de passe et une comparaison du mot de passe avec un mot de passe de référence prédéterminé afin d'identifier l'utilisateur, si la mesure de correspondance totale est différente de la valeur de seuil prédéterminée.

12. Procédé (100) selon l'une des revendications précédentes, dans lequel l'appareil mobile (200) communique avec un serveur de service (305) par l'intermédiaire d'un réseau de communication (303), dans lequel la mesure de correspondance totale est envoyée au serveur de service (305) et dans lequel le fait de comparer (109) la mesure de correspondance totale avec la valeur de seuil prédéterminée est effectué par le serveur de service (305) afin d'identifier l'utilisateur.

13. Appareil mobile (200) pour identifier un utilisateur de l'appareil mobile (200), comportant:

une pluralité de capteurs (201, 203), qui sont configurés pour détecter une première grandeur de capteur et une deuxième grandeur de capteur; et
un processeur (205), qui est configuré pour comparer la première grandeur de capteur avec une première grandeur de référence afin d'obtenir une première mesure de correspondance entre la première grandeur de capteur et la première grandeur de référence, pour comparer la deuxième grandeur de capteur avec une deuxième grandeur de référence afin d'obtenir une deuxième mesure de correspondance entre la deuxième grandeur de capteur et la deuxième grandeur de référence, pour combiner la première mesure de correspondance avec la deuxième mesure de correspondance afin d'obtenir une mesure de correspondance totale et pour comparer la mesure de correspondance totale avec une valeur de seuil prédéterminée afin d'identifier l'utilisateur.

14. Appareil mobile (200) selon la revendication 13, comportant en outre une interface de communication (301) qui est configurée pour communiquer avec un server de service (305) par l'intermédiaire d'un réseau de communication (303) et l'interface de communication (301) étant en outre configurée pour envoyer la mesure de correspondance totale au serveur de service (305).

15. Programme informatique comportant un code de programme pour exécuter le procédé (100) selon l'une des revendications 1 à 12, quand le code de programme est exécuté sur un ordinateur.

Fig. 1

EP 2 928 152 B1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013127591 A1

- EP 1318459 A1

**In der Beschreibung aufgeführte Nicht-Patentliteratur**

- Braunschweig/Wiesbaden: Friedrich Vieweg and Sohn Verlagsgesellschaft mbH. Biometrische Identifikation. Springer, 2001